Europäisches Patentamt

European Patent Office

Office européen des brevets

(19)

(11)  EP 1 491 375 A2

(12)  EUROPEAN PATENT APPLICATION

(43) Date of publication:
    29.12.2004 Bulletin 2004/53

(51) Int Cl.$^7$: B60H 1/32

(21) Application number: 04253599.7

(22) Date of filing: 16.06.2004

(84) Designated Contracting States:
    AT BE BG CH CY CZ DE DK EE ES FI FR GB GR
    HU IE IT LI LU MC NL PL PT RO SE SI SK TR
    Designated Extension States:
    AL HR LT LV MK

(30) Priority: 24.06.2003 JP 2003179938

(71) Applicant: Sanden Corporation
    Isesaki-shi, Gunma 372-8502 (JP)

(72) Inventors:
    • Imai, Tomonori c/o Sanden Corporation
      Isesaki-shi, Gunma 372-8502 (JP)
    • Inoue, Atsuo c/o Sanden Corporation
      Isesaki-shi, Gunma 372-8502 (JP)

(74) Representative: Haley, Stephen
    Gill Jennings & Every,
    Broadgate House,
    7 Eldon Street
    London EC2M 7LH (GB)

(54)  **Compressor output calculation unit and control unit using the same**

(57)  A compressor output calculation unit having a variable displacement compressor, a condenser, a pressure reducing mechanism and an evaporator, wherein a compressor torque or power is calculated based on a detected or estimated value of a refrigerant flow rate, a detected or estimated value of a refrigerant discharge pressure, a detected or estimated value of a refrigerant suction pressure, and a compressor rotational speed, and a control unit using the same. The compressor torque or power may be estimated at a high accuracy without using a refrigerant flow sensor.

FIG. 3

START

ESTIMATION OF EVAPORATOR
ENTHALPY DIFFERENCE
$\Delta le' = f(\Delta PdPs)$ or
$\Delta le' = f(Ttxv-r, Teo)$

ESTIMATION OF COOLING
ABILITY
$Qer' = f(BLV, Tei, Teo, \Delta PdPs)$

CALCULATION OF REFRIGERANT
FLOW RATE
$Gr' = Qer'/\Delta le'$

ESTIMATION OF Ps
$Ps' = f(Gr', Teo)$

ESTIMATION OF Pd
$Pd' = Ps' + \Delta PdPs$

CALCULATION OF TORQUE
ESTIMATED VALUE
$Tr' = f(Gr', Pd', Ps', Nc)$

## Description

The present invention relates to a compressor output calculation unit for a refrigeration cycle and a control unit using the same, and, more specifically, to a compressor output calculation unit which can adequately calculate a torque or a power of a compressor incorporated into an air conditioning system for vehicles, and a control unit using the same.

When a torque of a compressor in a refrigeration cycle having a compressor, a condenser, a pressure reducing mechanism and an evaporator of refrigerant is determined, for example in JP-A-2001-347828, the compressor torque is calculated based on a discharge pressure of the compressor. Further, in JP-A-2001-317467, the compressor torque is calculated based on a high-pressure side refrigerant pressure, a low-pressure side refrigerant pressure and a refrigerant flow rate.

In such a system as that disclosed in JP-A-2001-347828, however, because an actual torque varies depending on not only a discharge pressure but also a suction pressure and a refrigerant flow rate, the estimation only by the discharge pressure may have a problem in estimation accuracy. In order to increase the estimation accuracy, it is necessary to provide sensors for detecting a refrigerant flow rate and a suction pressure, and there occurs a cost up.

Further, in the calculation of compressor torque disclosed in JP-A-2001-317467 is based on the following technical concept.

Namely, a compressor torque Tr can be calculated by the following equation.

$$Tr = k \cdot Ps \left\{(Pd/Ps)^m - 1\right\} Vc$$

Where, Tr : compressor torque [kg-m],
Pd : discharge pressure,
Ps : suction pressure,
K, m: constant, and
Vc : discharge amount of compressor [cc].

The Vc can be calculated by the following equation.

$$Vc = Gr/(Nc \cdot F)$$

Where, Gr : refrigerant flow rate [kg/h],
Nc : compressor rotational speed [rpm], and
F : volume weight [kg/cm$^3$].

Further, because the volume weight F has a high correlation with Ps, the Tr can be calculated by the following equation.

$$Tr = k \cdot Ps \left\{(Pd/Ps)^m - 1\right\} Gr/(Nc \cdot Ps \cdot t)$$

Where, "t" is a constant.

Therefore, in order to calculate the torque, it is necessary to detect or estimate Pd, Ps, a refrigerant flow rate Gr and a compressor rotational speed Nc.

However, if the compressor torque is tried to be calculated by such a method, it is necessary to detect a refrigerant flow rate, and to detect the refrigerant flow rate, it is necessary to use a variable displacement compressor capable of controlling the flow rate or to provide a flow sensor. In particular, in the latter case, there is a problem that a pressure loss occurs in a refrigerant circuit.

Accordingly, it would be desirable to provide a compressor output calculation unit which can estimate a torque or a power of a compressor at a high accuracy without using a refrigerant flow sensor for detecting a refrigerant flow rate having a high correlation with a compressor torque, and a control unit using the same.

A compressor output calculation unit according to the present invention is provided for a refrigeration cycle having a variable displacement compressor capable of controlling a pressure difference between a refrigerant discharge pressure and a refrigerant suction pressure of the compressor, a condenser, a pressure reducing mechanism and an evaporator, and is characterized in that a torque or a power of the compressor is calculated based on a detected value or an estimated value of a refrigerant flow rate, a detected value or an estimated value of a refrigerant discharge pressure, a detected value or an estimated value of a refrigerant suction pressure, and a compressor rotational speed.

In this compressor output calculation unit according to the present invention, in particular, a structure may be employed wherein the unit further comprises a cooling ability estimation means for calculating an estimated value of a refrigerant side cooling ability in the evaporator, and an evaporator enthalpy difference estimation means for calculating an estimated value of an evaporator enthalpy difference which is a difference between specific enthalpies of refrigerant at an entrance and an exit of the evaporator, and an estimated value of the refrigerant flow rate is calculated from the estimated value of the refrigerant side cooling ability calculated by the cooling ability estimation means and the estimated value of the evaporator enthalpy difference calculated by the evaporator enthalpy difference estimation means.

Further, the present invention may be applied not only to a refrigeration cycle having a variable displacement compressor capable of controlling a pressure difference between a refrigerant discharge pressure and a refrigerant suction pressure of the compressor, but also to a refrigeration cycle having a usual compressor. Namely, a compressor output calculation unit according to the present invention is provided for a refrigeration cycle having a compressor, a condenser, a pressure reducing mechanism and an evaporator, and is characterized in that the unit comprises a cooling ability estimation means for calculating an estimated value of a refrigerant side cooling ability in the evaporator, and an evaporator enthalpy difference estimation means for calculating an estimated value of an evaporator enthalpy difference which is a difference between specific enthalpies of refrigerant at an entrance and an exit of the evaporator, and an estimated value of a refrigerant flow rate is calculated from the estimated value of the refrigerant side cooling ability calculated by the cooling ability estimation means and the estimated value of the evaporator enthalpy difference calculated by the evaporator enthalpy difference estimation means, and a torque or a power of the compressor is calculated based on the estimated value of the refrigerant flow rate, a detected value or an estimated value of a refrigerant discharge pressure, a detected value or an estimated value of a refrigerant suction pressure, and a compressor rotational speed.

In such a compressor output calculation unit according to the present invention, the estimated value of the evaporator enthalpy difference calculated by the evaporator enthalpy difference estimation means may be calculated based on the detected value or the estimated value of the refrigerant discharge pressure, or the detected value or the estimated value of the refrigerant suction pressure.

Further, the estimated value of said evaporator enthalpy difference calculated by the evaporator enthalpy difference estimation means may be calculated based on a detected value or an estimated value of the pressure difference between the refrigerant discharge pressure and the refrigerant suction pressure, or a physical value having a correlation with the pressure difference.

Further, the estimated value of the evaporator enthalpy difference calculated by the evaporator enthalpy difference estimation means may be calculated based on a temperature of refrigerant before passing through the pressure reducing mechanism and a temperature of air immediately after passing through the evaporator. Further, the estimated value of the evaporator enthalpy difference calculated by the evaporator enthalpy difference estimation means may be calculated based on a temperature of refrigerant before passing through the pressure reducing mechanism, the detected value or the estimated value of the refrigerant discharge pressure, and the detected value or the estimated value of the refrigerant suction pressure.

Further, the estimated value of the refrigerant side cooling ability calculated by the cooling ability estimation means may be calculated based on at least a physical value having a correlation with an amount of air sent to the evaporator, and a temperature of air immediately after passing through the evaporator. In this case, the estimated value of the refrigerant side cooling ability calculated by the cooling ability estimation means may be calculated based on the detected value or the estimated value of the refrigerant discharge pressure, or the detected value or the estimated value of the refrigerant suction pressure.

In a case where a variable displacement compressor capable of controlling a pressure difference between a refrigerant discharge pressure and a refrigerant suction pressure of the compressor is used, the estimated value of the refrigerant side cooling ability calculated by the cooling ability estimation means may be calculated based on a detected value or an estimated value of the pressure difference between the refrigerant discharge pressure and the refrigerant suction pressure, or a physical value having a correlation with the pressure difference.

As the physical value having a correlation with the pressure difference, a displacement control signal of the compressor can be used.

Further, the above-described refrigerant suction pressure may be calculated based on an evaporator exit air temperature which is a temperature of air immediately after passing the evaporator, or the detected value or the estimated value of the refrigerant flow rate.

Further, in a case where a variable displacement compressor capable of controlling a pressure difference between a refrigerant discharge pressure and a refrigerant suction pressure of the compressor is used, the refrigerant discharge pressure may be calculated by adding an estimated value of a pressure difference between the refrigerant discharge pressure and the refrigerant suction pressure, which is calculated based on a displacement control signal, to the detected value or the estimated value of the refrigerant suction pressure.

Further, in the compressor output calculation unit according to the present invention, a control may be employed wherein a compressor torque at a present time is estimated, and a displacement of the compressor is controlled so that the estimated compressor torque becomes a predetermined value.

The compressor torque calculated by such a compressor output calculation unit according to the present invention may be utilized for an actual compressor torque control, and further for an output control of an engine which is used as a drive source of a compressor in an air conditioning system for vehicles. Namely, the present invention is suitable for a case where the refrigeration cycle is a refrigeration cycle incorporated into an air conditioning system for vehicles.

In such a case applied for an air conditioning system for vehicles, an engine rotational speed may be used instead of the above-described compressor rotational speed. Namely, in a control unit using the compressor output calculation unit according to the present invention, for the calculation of the torque or the power of the compressor in the compressor output calculation unit, a rotational speed of an engine, which is a drive source of said compressor, may be used instead of the compressor rotational speed.

In such a control unit according to the present invention, a target engine output torque may be calculated based on a compressor torque estimated by the calculation, and an engine may be controlled based on a target engine output torque estimated by the calculation. Further, in a case where the compressor output calculation unit and an engine ECU are provided separately, a compressor torque estimated by the calculation may be outputted to the engine ECU. By this, the engine ECU can decide an optimum engine output referring to the compressor torque.

In such compressor output calculation unit and control unit using the same according to the present invention, the problems in the conventional technologies can be solved as follows. Namely, in the conventional technologies, in order to calculate a compressor torque, it is necessary to refer to a discharge pressure, a suction pressure, a refrigerant flow rate and a compressor rotational speed, and if sensors for detecting these are provided, a cost may increase. In the present invention, however, a refrigerant flow rate is calculated by estimating a cooling ability and a variation of enthalpy in an evaporator. By this, it is not necessary particularly to provide a sensor for detecting a refrigerant flow rate, and a cost down becomes possible. Further, estimated values may be used also as to a discharge pressure and a suction pressure, and in this case, a discharge pressure sensor and a suction pressure sensor become unnecessary, thereby achieving a great cost down and simplifying the whole of the system greatly. Furthermore, by utilizing such a compressor output calculation unit, it becomes possible to achieve a more adequate control of an actual compressor torque and an adequate control of engine output in consideration of a load to an engine.

Further features and advantages of the present invention will be understood from the following detailed description of the preferred embodiments of the present invention with reference to the accompanying figures, of which:

Fig. 1 is a schematic diagram of an air conditioning system for vehicles having a compressor output calculation unit according to an embodiment of the present invention.
Fig. 2 is a graph showing a relationship between a specific enthalpy and a pressure in a Mollier diagram.
Fig. 3 is a flowchart of an example for calculating an estimated torque in a compressor output calculation unit according to the present invention.
Fig. 4 is a flowchart of an example of a compressor torque control using a compressor output calculation unit according to an embodiment of the present invention.
Fig. 5 is a graph showing a relationship between a target engine output torque and a compressor torque target value, showing an example for deciding a compressor torque target value in the flow depicted in Fig. 4.
Fig. 6 is a flowchart of an example of an engine output torque control using a compressor output calculation unit according to an embodiment of the present invention.
Fig. 7 is a flowchart of another example of an engine output torque control using a compressor output calculation unit according to an embodiment of the present invention.
Fig. 8 is a graph showing a relationship between an estimated compressor torque and an engine rotational speed target value, showing an example for controlling an engine rotational speed at idling in the present invention.

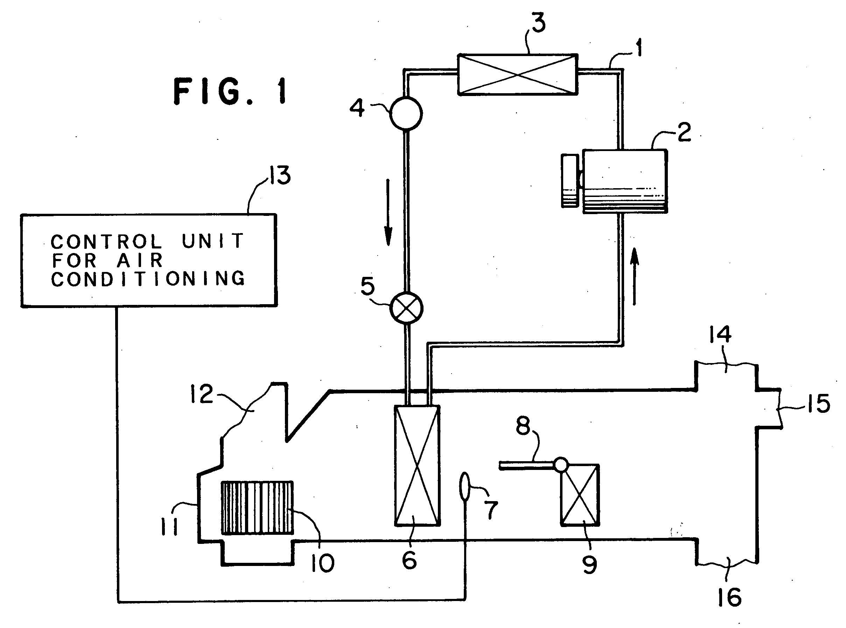

Fig. 1 depicts an air conditioning system for vehicles having a compressor output calculation unit according to an embodiment of the present invention. A refrigeration cycle 1 has a variable displacement compressor which can control a refrigerant discharge amount or a variable displacement compressor 2 which can control a pressure difference between a discharge pressure and a suction pressure, Variable displacement compressor 2 is driven by, for example, an engine of a vehicle, and a driving force of the engine is transmitted via an electromagnetic clutch incorporated into the compressor 2. Refrigerant is circulated in the refrigerant circuit of refrigeration cycle 1, a high-temperature and high-pressure refrigerant compressed by compressor 2 is cooled at a condenser 3 by heat exchange with outside air, and condensed and liquefied. The refrigerant in a two-phase condition of gas and liquid is separated into gas phase and liquid phase by a receiver dryer 4, and liquid refrigerant is reduced in pressure at a pressure reducing mechanism 5 (an expansion valve). The low-pressure refrigerant reduced in pressure flows into an evaporator 6, and heat exchanged with air sent by a blower 10. Refrigerant evaporated in evaporator 6 is sucked into compressor 2, and compressed again.

Blower 10 is disposed in an air duct 11 through which air for air conditioning of a vehicle interior passes, and air sucked from an air suction port 12 is sent to evaporator 6 by blower 10. A part of air having passed through evaporator 6 is a heater unit 9 disposed at a position downstream of evaporator 6. A rate of an amount of air passing through heater unit 9 to an amount of bypassing air is controlled by an air mixing damper 8. In this embodiment, an evaporator exit air temperature sensor 7 is provided to detect a temperature Teva of air immediately after passing through evaporator 6, and a signal of the detected temperature is inputted into a control unit for air conditioning 13. In this control unit for air conditioning 13, a compressor output calculation unit for a refrigeration cycle according to the present invention is incorporated. Therefore, this control unit 13 also functions as a control unit including a compressor output calculation unit according to the present invention. Further, this control unit for air conditioning 13 may be structured as a calculation unit for also controlling an engine of a vehicle, and an engine ECU may be provided separately. Respective air discharge ports 14, 15 and 16 such as a DEF-mode air discharge port, a VENT-mode air discharge port, and a FOOT-mode air discharge port, and these air discharge ports are controlled to be opened/closed by respective dampers (not shown).

In such an air conditioning system for vehicles having the above-described refrigeration cycle, a torque or a power of compressor 2 is calculated and estimated as follows.

Calculation of torque

A compressor torque Tr can be calculated by the following equation (1).

$$Tr = k \cdot Ps \{(Pd/Ps)^m - 1\} Vc \qquad (1)$$

Where, Tr : compressor torque [kg-m],
Pd : discharge pressure,
Ps : suction pressure,
K, m: constant, and
Vc : discharge amount of compressor [cc].

The Vc can be calculated by the following equation.

$$Vc = Gr/(Nc \cdot F)$$

Where, Gr : refrigerant flow rate [kg/h],
Nc : compressor rotational speed [rpm], and
F : volume weight [kg/cm$^3$].

Further, because the volume weight F has a high correlation with Ps, the Tr can be calculated by the following equation (2).

$$Tr = k \cdot Ps \{(Pd/Ps)^m - 1\} Gr/(Nc \cdot Ps \cdot t) \qquad (2)$$

Where, "t" is a constant.

Therefore, in order to calculate the torque, it is necessary to detect or estimate Pd, Ps, a refrigerant flow rate Gr and a compressor rotational speed Nc.

Hereinafter, methods for detecting or estimating respective values will be explained.

(1) Estimation of refrigerant flow rate:
The refrigerant side cooling ability in an evaporator Qer is represented as the product of a specific enthalpy difference of refrigerant between those at an entrance and an exit of the evaporator and a refrigerant flow rate.

$$Qer = \Delta Ie * Gr$$

Where, Qer : a refrigerant side cooling ability in an evaporator,
$\Delta Ie$ : a specific enthalpy difference of refrigerant between that at an entrance and that an exit of an evaporator, and
Gr : a refrigerant flow rate.

Therefore, if the specific enthalpy difference of refrigerant $\Delta Ie$ and the refrigerant side cooling ability Qer are estimated, the refrigerant flow rate Gr can be calculated. The specific enthalpy difference of refrigerant $\Delta Ie$ and the refrigerant side cooling ability Qer are estimated as follows ((i) and (ii)).

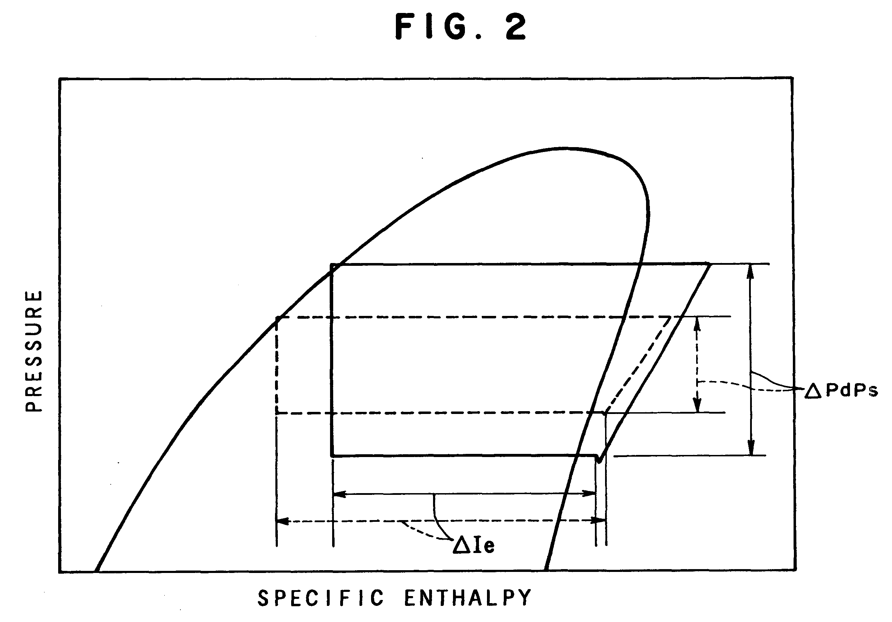

(i) Estimation of a specific enthalpy difference of refrigerant at entrance and exit of an evaporator $\Delta Ie$:
As shown in Fig. 2, in a Mollier diagram, it is understood that the specific enthalpy difference of refrigerant at entrance and exit of an evaporator $\Delta Ie$ is greatly influenced by $\Delta PdPs$ which is a difference between Pd and Ps. Namely, the greater $\Delta PdPs$ becomes, the smaller $\Delta Ie$ becomes.

As a result of investigation of experimental data, it has been found that $\Delta Ie$ can be estimated at a high accuracy by the following equation.

$$\Delta Ie = a * \Delta PdPs + m$$

Where, a, b, m are constants obtained from an experiment.

Alternatively, $\Delta Ie$ can also be estimated by the following equation.

$$\Delta Ie = a * Pd + b * Ps + m$$

Where, a, b, m are constants obtained from an experiment.

Further, in a case of an air conditioning system using a subcool type condenser capable of super cooling of refrigerant as a condenser, because $\Delta Ie$ greatly varies depending on a value of super cooling degree, $\Delta Ie$ in consideration of the value of super cooling degree can be estimated by referring to a temperature of refrigerant Ttxv-r before passing through a pressure reducing mechanism.

$$\Delta Ie = a * Ttxv\text{-}r + b * Teo + m$$

Where, Ttxv-r : a temperature of refrigerant before passing through a pressure reducing mechanism,
Teo : a temperature of air immediately after passing through an evaporator, and
a, b, m: constants obtained from an experiment.

Alternatively, ΔIe can be estimated by the following equation.

$$\Delta Ie = a * Ttxv\text{-}r + b * Pd + c * Ps + m$$

Where, a, b, c, m are constants obtained from an experiment.

(ii) Estimation of an evaporator cooling ability Qer:

The evaporator cooling ability Qer has a high correlation with an amount of air passing through an evaporator of a physical value having a correlation therewith BLV, a temperature of air before passing through an evaporator Tei, and a temperature of air immediately after passing through an evaporator Teo, and therefore, the evaporator cooling ability Qer can be calculated by the following equation.

$$Qer' = k * BLV * (Tei \text{ - } Teo) + m$$

Where, k, m are constants. As air amount BLV, an applied voltage or an input current to a blower motor (a motor for driving a blower) may be employed.

Further, the Qer can be estimated at a higher accuracy by referring to ΔPdPs. Therefore, the estimated value Qer' of evaporator cooling ability can be calculated at a higher accuracy by the following equation.

$$Qer' = k * BLV * (Tei \text{ - } Teo) + b * Pd + c * Ps + m$$

Where, a, b, c, m are constants obtained from an experiment.

Further, a temperature of air before passing through an evaporator Tei may be referred to an outside air temperature in an outside air mode and a vehicle interior temperature in an inside air mode.

(iii) Calculation of an estimated value of refrigerant flow rate Gr':

The estimated value of refrigerant flow rate Gr' is calculated from the estimated value of evaporator enthalpy difference ΔIe' and the estimated value of evaporator cooling ability Qer' by the following equation.

$$Gr' = Qer'/\Delta Ie'$$

(2) Detection of refrigerant suction pressure Ps or estimation thereof:

The following method (i) or (ii) is carried out.

(i) Actual measurement is carried out by a Ps sensor.
(ii) A refrigerant pressure at an entrance of an evaporator is estimated from a temperature of air immediately after passing through the evaporator, and Ps is estimated by estimating a pressure loss from the entrance to an entrance of a compressor by a refrigerant flow rate.

Since Ps has a high correlation with a temperature of air immediately after passing through an evaporator Teo and a refrigerant flow rate Gr, it is possible to estimate Ps by the following equation.

$$Ps' = a * Teo + b * Gr + m$$

Where, an estimated value calculated by the aforementioned method may be used for the refrigerant flow rate Gr.

Ps' : an estimated value of refrigerant suction pressure

Teo : a temperature of air immediately after passing through an evaporator

Gr : a measured value or an estimated value of refrigerant flow rate

(3) Detection of refrigerant discharge pressure Pd or estimation thereof:

The following method (i) or (ii) is carried out.

(i) Actual measurement is carried out by a Pd sensor.
(ii) A value obtained by adding an estimated value of ΔPdPs, which is a pressure difference between Pd and Ps, to an estimated value ofPs is determined as an estimated value of Pd.

In a case where a variable displacement compressor capable of controlling ΔPdPs is used, the ΔPdPs can be estimated from a displacement control signal of the compressor.

Calculation of estimated torque value:

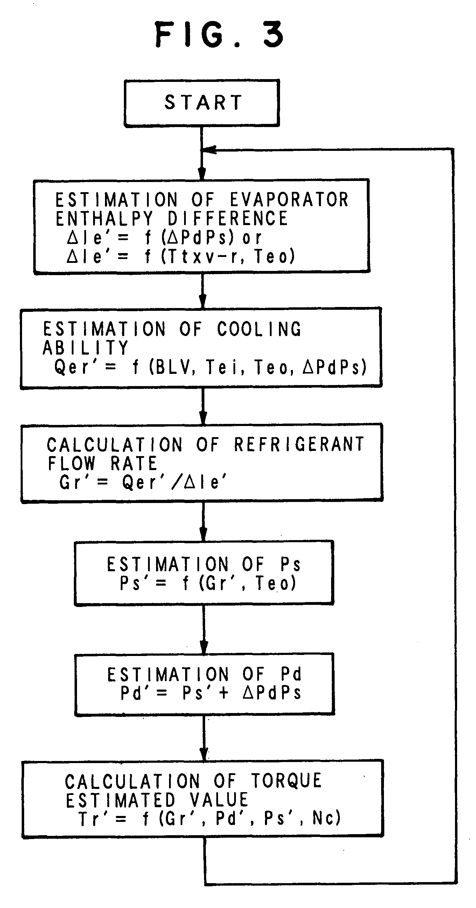

A compressor rotational speed may also be detected by referring to a rotational speed of an engine for a vehicle. Then, the estimated torque value can be calculated from a refrigerant flow rate, Pd, Ps and the engine rotational speed by the aforementioned equation (2). Such a calculation for an estimated torque value may be carried out, for example, along a flow shown in Fig. 3. In Fig. 3, dashed marks expresses estimated values.

Further, in the present invention, utilizing the above-described estimation of compressor torque, a control of an actual compressor torque or an output control of an engine can be carried out, for example, as follows.

Control using the calculated torque value:

(1) Compressor torque control:

A compressor torque target value is set, and a compressor displacement control signal is controlled so that the estimated torque value and the torque target value coincide with each other. Where, the compressor torque target value is a value set in accordance with a load to an engine. For example, when the engine load is very great such as at the time of acceleration or climbing, for the purpose of reduction of the engine load, a relatively small torque target value is set. This torque target value may be set smaller as the engine load increases. It is possible to detect the engine load by an actuating amount of an accelerator, an engine rotational speed or a vehicle running speed.

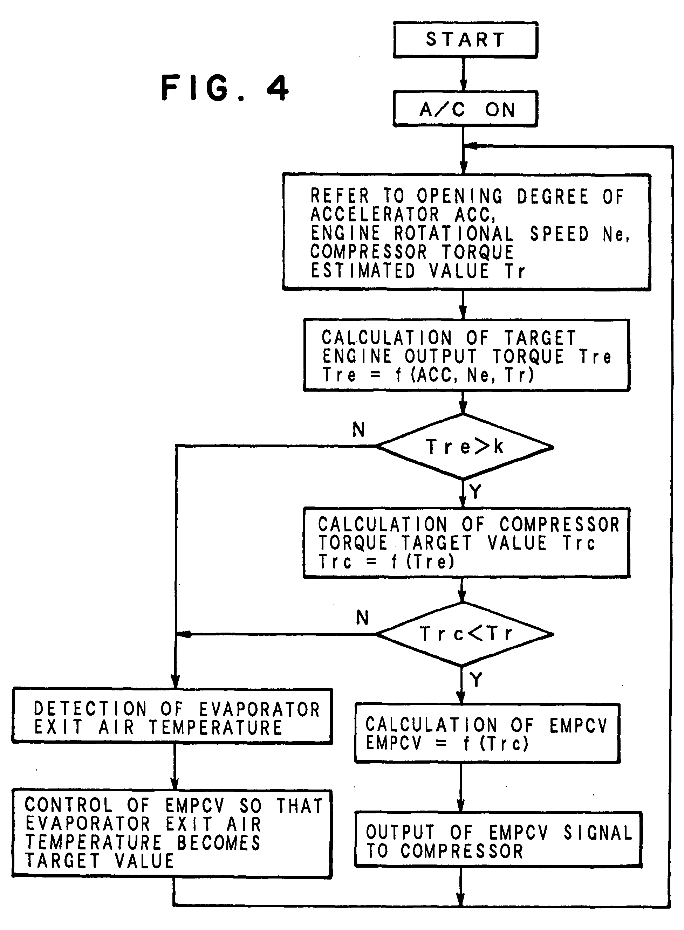

For example, as shown in Fig. 4, when a target engine output torque Tre is more than "k" and it is very great (at the time of rapid acceleration and climbing), a upper limit is provided to the compressor torque. Namely, as a control flow, for example, as shown in Fig. 4, at the time of A/C (air conditioner) ON (compressor ON), the target engine output torque Tre is calculated referring to an opening degree of accelerator ACC, an engine rotational speed Ne and a compressor torque estimated value Tr. In a case where the Tre is more than a predetermined set value "k", the compressor torque target value Trc is calculated, and the Trc is set as the compressor torque upper limit. Where, the Trc is calculated from target engine output torque Tre. In a case where the Trc, which is the torque upper limit, is more than a present compressor torque Tr, a compressor displacement control signal EMPCV is calculated from Trc and the EMPCV signal is outputted to the compressor so that the compressor torque becomes Trc. In cases where Tre is "k" or less and where the calculated Trc is the present torque Tr or more, the displacement control signal is controlled so that an evaporator exit air temperature becomes a target value.

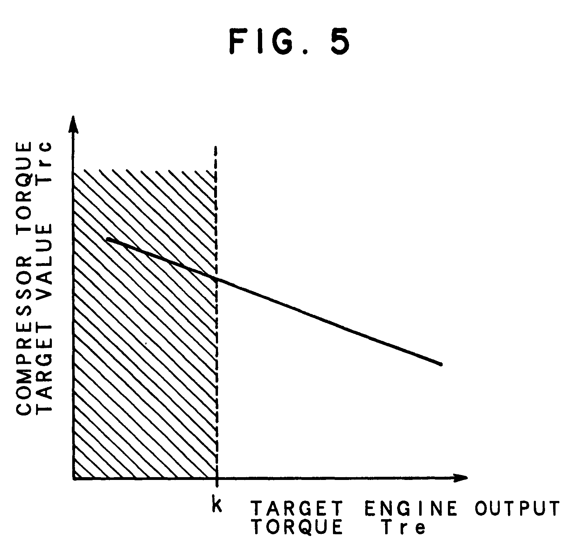

In the flow shown in Fig. 4, the compressor torque target value Trc is decided relative to the target engine output torque Tre, for example, as shown in Fig. 5. In the hatching region in Fig. 5, the displacement control signal is controlled so that the evaporator exit air temperature becomes the target value.

(2) Engine output control referring to the compressor torque information:

In an engine ECU for example, a value obtained by adding a compressor torque estimated value to a calculated target engine output torque is set as a final torque target value. By this, even if the torque for driving a compressor varies, because a drive force for driving a vehicle is constant, it becomes possible to improve drivability. Further, at the time of idling, because an engine rotational speed can be set at a lower value depending upon the compressor torque estimated value (because an engine stall does not occur even if the rotational speed is set low when the compressor torque is small), a fuel consumption may be improved. Further, an engine ECU may directly calculate the compressor torque estimated value, or the torque estimated value may be outputted from the control unit for air conditioning to the engine ECU.

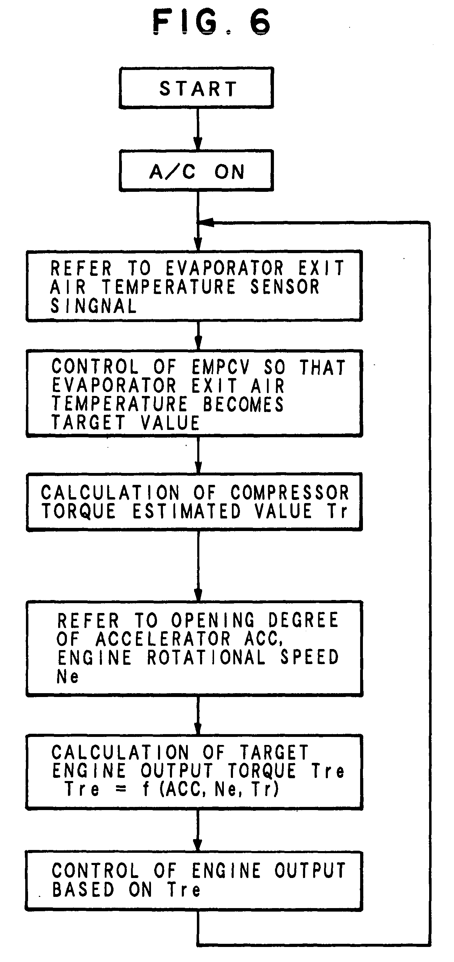

For example, in Fig. 6, a control flow, in an example of a case where the compressor torque calculation unit (a compressor output calculation unit) and an engine ECU are constructed integrally, is shown. As shown in Fig. 6, at the time of A/C (air conditioner) ON (compressor ON), referring to an evaporator exit air temperature, a displacement control signal is controlled so that the evaporator exit air temperature becomes a target value. Then, the compressor torque Tr is calculated. Referring to an opening degree of accelerator ACC and an engine rotational speed Ne, a target engine output torque Tre is calculated from the calculated Tr. Then, an engine output is controlled based on this target engine output torque Tre.

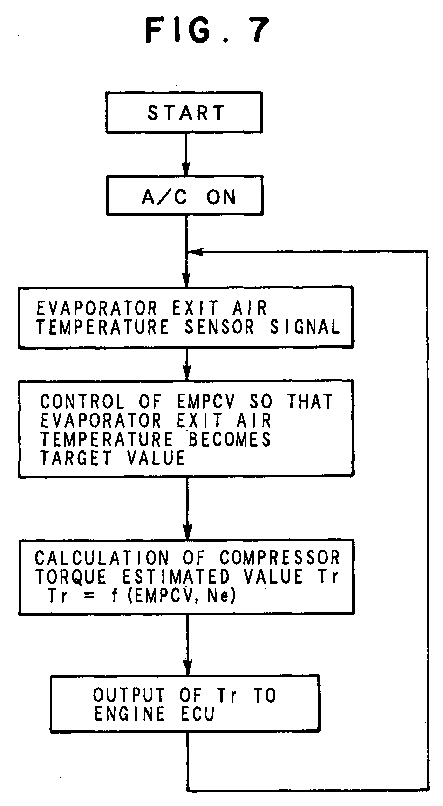

Further, in Fig. 7, an example of a control flow, in a case where a compressor torque calculation unit (a compressor output calculation unit) and an engine ECU are provided separately, is shown. As shown in Fig. 7, at the time of A/C (air conditioner) ON (compressor ON), first, referring to an evaporator exit air temperature, a displacement control signal is controlled so that the evaporator exit air temperature becomes a target value. The compressor torque Tr is calculated is a manner shown in Fig. 3. Then, the calculated compressor torque Tr is outputted to the engine ECU.

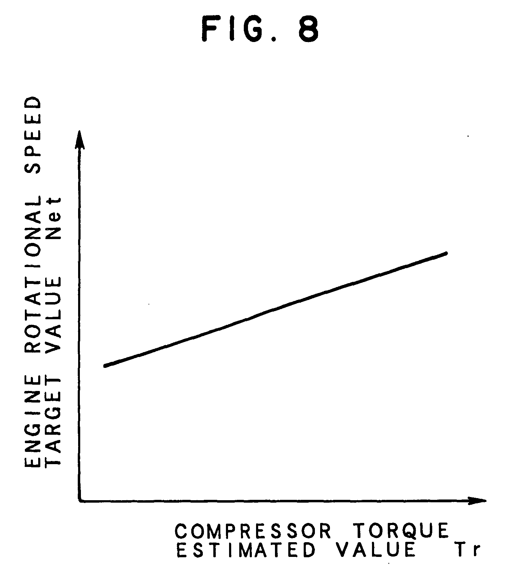

Further, Fig. 8 shows an example of an engine rotational speed control at the time of idling. An engine rotational speed target value Net at the time of idling can be decided from the compressor torque estimated value as shown in Fig. 8.

**Claims**

1. A compressor output calculation unit for a refrigeration cycle having a variable displacement compressor capable of controlling a pressure difference between a refrigerant discharge pressure and a refrigerant suction pressure of said compressor, a condenser, a pressure reducing mechanism and an evaporator, **characterized in that** a torque or a power of said compressor is calculated based on a detected value or an estimated value of a refrigerant flow rate, a detected value or an estimated value of a refrigerant discharge pressure, a detected value or an estimated value of a refrigerant suction pressure, and a compressor rotational speed.

2.  The compressor output calculation unit according to claim 1, wherein said unit further comprises a cooling ability estimation means for calculating an estimated value of a refrigerant side cooling ability in said evaporator, and an evaporator enthalpy difference estimation means for calculating an estimated value of an evaporator enthalpy difference which is a difference between specific enthalpies of refrigerant at an entrance and an exit of said evaporator, and an estimated value of said refrigerant flow rate is calculated from said estimated value of said refrigerant side cooling ability calculated by said cooling ability estimation means and said estimated value of said evaporator enthalpy difference calculated by said evaporator enthalpy difference estimation means.

3.  The compressor output calculation unit according to claim 2, wherein said estimated value of said evaporator enthalpy difference calculated by said evaporator enthalpy difference estimation means is calculated based on said detected value or said estimated value of said refrigerant discharge pressure, or said detected value or said estimated value of said refrigerant suction pressure.

4.  The compressor output calculation unit according to claim 2, wherein said estimated value of said evaporator enthalpy difference calculated by said evaporator enthalpy difference estimation means is calculated based on a detected value or an estimated value of said pressure difference between said refrigerant discharge pressure and said refrigerant suction pressure, or a physical value having a correlation with said pressure difference.

5.  The compressor output calculation unit according to claim 2, wherein said estimated value of said evaporator enthalpy difference calculated by said evaporator enthalpy difference estimation means is calculated based on a temperature of refrigerant before passing through said pressure reducing mechanism and a temperature of air immediately after passing through said evaporator.

6.  The compressor output calculation unit according to claim 2, wherein said estimated value of said evaporator enthalpy difference calculated by said evaporator enthalpy difference estimation means is calculated based on a temperature of refrigerant before passing through said pressure reducing mechanism, said detected value or said estimated value of said refrigerant discharge pressure, and said detected value or said estimated value of said refrigerant suction pressure.

7.  The compressor output calculation unit according to claim 2, wherein said estimated value of said refrigerant side cooling ability calculated by said cooling ability estimation means is calculated based on at least a physical value having a correlation with an amount of air sent to said evaporator, and a temperature of air immediately after passing through said evaporator.

8.  The compressor output calculation unit according to claim 7, wherein said estimated value of said refrigerant side cooling ability calculated by said cooling ability estimation means is calculated based on said detected value or said estimated value of said refrigerant discharge pressure, or said detected value or said estimated value of said refrigerant suction pressure.

9.  The compressor output calculation unit according to claim 7, wherein said estimated value of said refrigerant side cooling ability calculated by said cooling ability estimation means is calculated based on a detected value or an estimated value of said pressure difference between said refrigerant discharge pressure and said refrigerant suction pressure, or a physical value having a correlation with said pressure difference.

10. The compressor output calculation unit according to claim 4 or 9, wherein said physical value having a correlation with said pressure difference is a displacement control signal of said compressor.

11. The compressor output calculation unit according to claim 1 or 2, wherein said refrigerant suction pressure is calculated based on an evaporator exit air temperature which is a temperature of air immediately after passing said evaporator, or said detected value or said estimated value of said refrigerant flow rate.

12. The compressor output calculation unit according to any of claims 1 to 11, wherein said refrigerant discharge pressure is calculated by adding an estimated value of a pressure difference between said refrigerant discharge pressure and said refrigerant suction pressure, which is calculated based on a displacement control signal, to said detected value or said estimated value of said refrigerant suction pressure.

13. The compressor output calculation unit according to any of claims 1 to 12, wherein a compressor torque at a present time is estimated, and a displacement of said compressor is controlled so that said estimated compressor torque becomes a predetermined value.

14. The compressor output calculation unit according to any of claims 1 to 13, wherein said refrigeration cycle is a refrigeration cycle incorporated into an air conditioning system for vehicles.

15. A control unit using the compressor output calculation unit according to any of claims 1 to 14, wherein, for said calculation of said torque or said power of said compressor in said compressor output calculation unit, a rotational speed of an engine, which is a drive source of said compressor, is used instead of said compressor rotational speed.

16. The unit according to claim 14 or 15, wherein a target engine output torque is calculated based on a compressor torque estimated by said calculation, and an engine is controlled based on a target engine output torque estimated by said calculation.

17. The unit according to any of claims 14 to 16, wherein a compressor torque estimated by said calculation is outputted to an engine ECU.

18. A compressor output calculation unit for a refrigeration cycle having a compressor, a condenser, a pressure reducing mechanism and an evaporator, **characterized in that** said unit comprises a cooling ability estimation means for calculating an estimated value of a refrigerant side cooling ability in said evaporator, and an evaporator enthalpy difference estimation means for calculating an estimated value of an evaporator enthalpy difference which is a difference between specific enthalpies of refrigerant at an entrance and an exit of said evaporator, and an estimated value of a refrigerant flow rate is calculated from said estimated value of said refrigerant side cooling ability calculated by said cooling ability estimation means and said estimated value of said evaporator enthalpy difference calculated by said evaporator enthalpy difference estimation means, and a torque or a power of said compressor is calculated based on said estimated value of said refrigerant flow rate, a detected value or an estimated value of a refrigerant discharge pressure, a detected value or an estimated value of a refrigerant suction pressure, and a compressor rotational speed.

19. The compressor output calculation unit according to claim 18, wherein said estimated value of said evaporator enthalpy difference calculated by said evaporator enthalpy difference estimation means is calculated based on said detected value or said estimated value of said refrigerant discharge pressure, and said detected value or said estimated value of said refrigerant suction pressure.

20. The compressor output calculation unit according to claim 18, wherein said estimated value of said evaporator enthalpy difference calculated by said evaporator enthalpy difference estimation means is calculated based on a temperature of refrigerant before passing through said pressure reducing mechanism and a temperature of air immediately after passing through said evaporator.

21. The compressor output calculation unit according to claim 18, wherein said estimated value of said evaporator enthalpy difference calculated by said evaporator enthalpy difference estimation means is calculated based on a temperature of refrigerant before passing through said pressure reducing mechanism, said detected value or said estimated value of said refrigerant discharge pressure, and said detected value or said estimated value of said refrigerant suction pressure.

22. The compressor output calculation unit according to claim 18, wherein said estimated value of said refrigerant side cooling ability calculated by said cooling ability estimation means is calculated based on at least a physical value having a correlation with an amount of air sent to said evaporator, and a temperature of air immediately after passing through said evaporator.

23. The compressor output calculation unit according to claim 22, wherein said estimated value of said refrigerant side cooling ability calculated by said cooling ability estimation means is calculated based on said detected value or said estimated value of said refrigerant discharge pressure, or said detected value or said estimated value of said refrigerant suction pressure.

24. The compressor output calculation unit according to claim 18, wherein said refrigerant suction pressure is calculated based on an evaporator exit air temperature which is a temperature of air immediately after passing said evaporator, or said estimated value of said refrigerant flow rate.

25. The compressor output calculation unit according to any of claims 18 to 24, wherein a compressor torque at a present time is estimated, and a displacement of said compressor is controlled so that said estimated compressor torque becomes a predetermined value.

26. The compressor output calculation unit according to any of claims 18 to 25, wherein said refrigeration cycle is a refrigeration cycle incorporated into an air conditioning system for vehicles.

27. A control unit using the compressor output calculation unit according to any of claims 18 to 26, wherein, for said calculation of said torque or said power of said compressor in said compressor output calculation unit, a rotational speed of an engine, which is a drive source of said compressor, is used instead of said compressor rotational speed.

28. The unit according to claim 26 or 27, wherein a target engine output torque is calculated based on a compressor torque estimated by said calculation, and an engine is controlled based on a target engine output torque estimated by said calculation.

29. The unit according to any of claims 26 to 28, wherein a compressor torque estimated by said calculation is outputted to an engine ECU.

FIG. 1

CONTROL UNIT
FOR AIR
CONDITIONING

EP 1 491 375 A2

# FIG. 2

ΔPdPs

ΔIe

SPECIFIC ENTHALPY

PRESSURE

# FIG. 3

# FIG. 4

```
                              ┌──────────────┐
                              │    START     │
                              └──────┬───────┘
                                     │
                              ┌──────┴───────┐
                              │   A/C  ON    │
                              └──────┬───────┘
                                     │
             ┌───────────────────────────────────────────┐
             │ REFER TO OPENING DEGREE OF                 │
             │ ACCELERATOR ACC,                           │
             │ ENGINE ROTATIONAL SPEED Ne,                │
             │ COMPRESSOR TORQUE                          │
             │ ESTIMATED VALUE Tr                         │
             └───────────────────┬───────────────────────┘
                                 │
             ┌───────────────────────────────────────────┐
             │ CALCULATION OF TARGET                      │
             │ ENGINE OUTPUT TORQUE Tre                   │
             │ Tre = f(ACC, Ne, Tr)                       │
             └───────────────────┬───────────────────────┘
                                 │
                    N        ╱────────╲
          ◄──────────────────   Tre>k   
                             ╲────────╱
                                 │ Y
             ┌───────────────────────────────────────────┐
             │ CALCULATION OF COMPRESSOR                  │
             │ TORQUE TARGET VALUE Trc                    │
             │ Trc = f(Tre)                               │
             └───────────────────┬───────────────────────┘
                                 │
                    N        ╱────────╲
          ◄──────────────────  Trc<Tr   
                             ╲────────╱
                                 │ Y
```

DETECTION OF EVAPORATOR
EXIT AIR TEMPERATURE

CALCULATION OF EMPCV
EMPCV = f(Trc)

CONTROL OF EMPCV SO THAT
EVAPORATOR EXIT AIR
TEMPERATURE BECOMES
TARGET VALUE

OUTPUT OF EMPCV SIGNAL
TO COMPRESSOR

# FIG. 5

# FIG. 6

```
┌─────────────────┐
│     START       │
└─────────────────┘
         │
         ▼
┌─────────────────┐
│    A/C  ON      │
└─────────────────┘
         │
         ▼
┌──────────────────────────────┐
│ REFER TO EVAPORATOR EXIT     │
│ AIR TEMPERATURE SENSOR       │
│ SINGNAL                      │
└──────────────────────────────┘
         │
         ▼
┌──────────────────────────────┐
│ CONTROL OF EMPCV SO THAT     │
│ EVAPORATOR EXIT AIR          │
│ TEMPERATURE BECOMES          │
│ TARGET VALUE                 │
└──────────────────────────────┘
         │
         ▼
┌──────────────────────────────┐
│ CALCULATION OF COMPRESSOR    │
│ TORQUE ESTIMATED VALUE Tr    │
└──────────────────────────────┘
         │
         ▼
┌──────────────────────────────┐
│ REFER TO OPENING DEGREE      │
│ OF ACCELERATOR ACC,          │
│ ENGINE ROTATIONAL SPEED      │
│ Ne                           │
└──────────────────────────────┘
         │
         ▼
┌──────────────────────────────┐
│ CALCULATION OF TARGET        │
│ ENGINE OUTPUT TORQUE Tre     │
│ Tre = f (ACC, Ne, Tr)        │
└──────────────────────────────┘
         │
         ▼
┌──────────────────────────────┐
│ CONTROL OF ENGINE OUTPUT     │
│ BASED ON Tre                 │
└──────────────────────────────┘
```

# FIG . 7

```
            ┌─────────────────┐
            │     START       │
            └─────────────────┘
                     │
                     ▼
            ┌─────────────────┐
            │    A/C  ON       │
            └─────────────────┘
                     │
                     ▼
    ┌──────────────────────────────────┐
    │  EVAPORATOR EXIT AIR              │
    │  TEMPERATURE SENSOR SIGNAL        │
    └──────────────────────────────────┘
                     │
                     ▼
    ┌──────────────────────────────────┐
    │  CONTROL OF EMPCV SO THAT         │
    │  EVAPORATOR EXIT AIR              │
    │  TEMPERATURE BECOMES              │
    │  TARGET VALUE                     │
    └──────────────────────────────────┘
                     │
                     ▼
    ┌──────────────────────────────────┐
    │  CALCULATION OF COMPRESSOR        │
    │  TORQUE ESTIMATED VALUE Tr        │
    │    Tr = f (EMPCV, Ne)             │
    └──────────────────────────────────┘
                     │
                     ▼
    ┌──────────────────────────────────┐
    │  OUTPUT OF Tr TO                  │
    │  ENGINE ECU                       │
    └──────────────────────────────────┘
                     │
                     └──────────►
```

$Tr = f (EMPCV, Ne)$

# FIG. 8